# EUROPEAN PATENT APPLICATION

(11) **EP 4 737 854 A1**
(43) Date of publication of application: **06.05.2026**
(21) Application number: 24210177.2
(22) Date of filing: 31.10.2024
(51) Int. Cl.: G01C 21/00, G01C 21/20, G01C 21/30

(54) **METHODS, SYSTEMS, AND COMPUTER PROGRAM PRODUCTS FOR GEOREFERENCING**

(71) Applicant: Helsing GmbH, 81671 Munich (DE)
(72) Inventor: WENZEL, Patrick, 81671 Munich (DE); WHITE, Nick, 81671 Munich (DE)
(74) Representative: Rummler, Felix

(57) **Abstract**

A computer-implemented georeferencing method, the method comprising: receiving sensor data representing a portion of the surface of the earth, wherein the sensor data is obtainable or obtained by a sensor included in or attached to a vehicle, preferably an aerial vehicle; segmenting the sensor data to generate a sensor data segmentation map comprising one or more segments and a set of labels, wherein each of the labels relates to a segment and is indicative of a type of the segment; determining a labelled reference segmentation map obtainable by segmenting georeferenced reference data; and comparing the sensor data segmentation map to the reference segmentation map to determine a georeference of the sensor data segmentation map.

## Description

### Technical Field

The present disclosure relates to systems, methods, and computer program products for Georeferencing. The disclosure is applicable in the field of computer vision, in particular visual self-positioning for vehicle navigation.

### Background

A frequent problem in visual self-localization is relating a measured position of a location on the surface of the earth to a known georeference. This requires both reliable identification and precise determination of the location.

A known solution includes capturing a picture of a portion of the surface of the earth by a camera and comparing the image to a georeferenced image. The reliability and accuracy of this method depend, however, on the quality of the taken image and on atmospheric conditions. Moreover, processing the images for comparison is computationally expensive.

There is a need for systems and methods that overcome these shortcomings.

### Summary

Disclosed and claimed herein are systems, methods, and devices for georeferencing.

A first aspect of the present disclosure relates to a computer-implemented georeferencing method. The method comprises the following steps:
- receiving sensor data representing a portion of the surface of the earth, wherein the sensor data is obtainable or obtained by a sensor included in or attached to a vehicle, preferably an aerial vehicle;
- segmenting the sensor data to generate a sensor data segmentation map comprising one or more segments and a set of labels, wherein each of the labels relates to a segment and is indicative of a type of the segment;
- determining a labelled reference segmentation map obtainable by segmenting georeferenced reference data; and
- comparing the sensor data segmentation map to the reference segmentation map to determine a georeference of the sensor data segmentation map.

Comparing segmentation maps has the advantage that the results are more accurate, and the processing time is reduced, in particular in comparison to comparing the images directly or detecting and comparing key points. In particular, the results of the comparison are more robust with respect to changes in brightness and illumination. Each segmentation map may be seen a representation of the portion of the surface of the earth. Depending on the size of the segments, the segmentation map may introduce a simplification of the representation.

In an embodiment, the type of the segment is indicative of whether the segment is indicative of an area that comprises man-made objects and/or vegetation. These two cases are distinguishable by distance measuring processes, such as the determination of a two- or three-dimensional surface by active or passive means, such as LIDAR and/or photogrammetry. They allow for an unambiguous characterization of the surface of the earth, and corresponding information is generally available from reference maps. Moreover, such segmentation maps change only very little, if at all, over the seasons since man-made objects, such as buildings, and vegetation do not appear or disappear in the course of a year. Changes that typically occur over the seasons, such as foliage and/or snow, have a less sizable effect on such segmentation maps much less than on photographs.

In a further embodiment, the type of the segment is indicative of a roughness of an area related to the segment. A roughness of an area is determinable by a distance measuring process and accurately describes different kinds of surfaces. For example, a smooth surface, such as a street, the tarmac of an airport, or a water surface of a lake, can be distinguished from rough surface, such as a corn field. The reliability of the comparison is thereby improved.

In another embodiment, the method further comprises determining a pose of the vehicle based on the comparison, in particular based on the determined georeference of the sensor data segmentation map. This allows application of the method for visual self-positioning. This is particularly advantageous, when navigating a terrestrial or aerial vehicle where the sensor data are typically recorded at low altitude. However, the georeferenced reference data may comprise satellite images recorded at a fixed and much higher altitude. The systematic differences between these images are better overcome by comparing the segmentation maps, rather than comparing the images.

In yet another embodiment, the sensor comprises a range-finding system, preferably a sweeping range-finding system, more preferably a LIDAR sensor. Range-finding sensors allow determining a relative elevation profile. Active sensors, such as LIDAR or RADAR sensors, are preferred because they are operable day and night and in adverse weather conditions. Therefore, one LIDAR sensor mounted on a vehicle allows determination of the sensor data in a variety of conditions and for a variety of mission profiles. It is not necessary to install a plurality of different sensors on the vehicle that operate under different environmental conditions. However, passive range-finding systems may be used alternatively or in addition.

In a further embodiment, the sensor data comprises one or more measurements by the sensor, wherein each measurement is indicative of a position of a location on the surface of the earth relative to the position of the vehicle. In this case, the method further comprises the following two steps:
- determining an absolute position for each respective location related to each measurement based on an estimated position of the vehicle, and
- segmenting the sensor data based on the absolute position.

This allows taking into account any stored data comprising information on the absolute position. For example, the relative position may be determined by a passive sensor, such as photogrammetry, or by an active sensor, such as RADAR, or LIDAR. The absolute position may be estimated by an inertial navigation system. This allows obtaining in principle any information on the location, such as georeferenced reference segmentation maps around the location, such that the comparison step and subsequent determination of a pose increases the accuracy of the positional information.

In another embodiment, the method further comprises segmenting the sensor data based on the or an absolute position of the portion, in particular the or a location, on the surface of the earth, and determining the absolute position comprises the following steps:
- receiving a first indication of an altitude of the vehicle from a first altimeter, preferably a barometer; and
- determining an elevation of the portion or location based on the altitude of the vehicle and, preferably, the sensor data.

This can improve the precision of the determination of the altitude of the location, since altimeters can accurately determine an absolute altitude, and the sensor data are generable by high-precision measurement devices, such as LIDAR or a high-resolution camera that permits image analysis by photogrammetry. The result of this sensor fusion approach is an accurate determination of an altitude of the portion of the surface of the earth. This is applicable to determine a correct scaling of the reference segmentation map. The use of a barometer has the advantage that it provides a measurement independent from the determination of the location.

In yet another embodiment, segmenting the sensor data comprises receiving a digital elevation map and/or a digital terrain map and determining the type of the segment based on a corresponding elevation at a longitude and latitude based on coordinates of the location.

The digital elevation map may comprise elevation information related to an area shown on the reference data. In particular, a difference between the absolute elevation and the elevation according to the digital elevation / terrain map may be determined to classify the segment.

In yet another embodiment, segmenting the sensor data comprises processing the measurements by a machine learning algorithm, preferably a deep neural network. Machine learning algorithms are particularly suited for segmentation tasks. The machine learning algorithm may be trained by supervised or self-supervised learning on a dataset recorded by a vehicle of the type used in inference, for execution of the method.

In another embodiment, the method further comprises the following steps:
- scaling the labelled reference segmentation map to a horizontal scale of the sensor data segmentation map; and/or
- scaling the sensor data segmentation map to a horizontal scale of the labelled reference segmentation map.

This leads to the advantage that the sensor data segmentation map and the reference segmentation map are at the same scale. The comparison process is then simplified in that it only serves to determine a rotation angle, image distortions, and a horizontal shift in location, whereas the global scale is already determined.

In a further embodiment, the scaling is executed prior to comparing the sensor data segmentation map to the reference segmentation map, and the scaling is based on a second indication of the altitude of the vehicle. This provides a further independent measurement that allows integration of further sources of information processed by sensor fusion. The scaling is preferably based on an altitude measurement by a second altimeter operable to measure a distance of the vehicle to the ground. This further increases the precision of the subsequent comparing step. The altimeter may be the or a range-finding system.

In a further embodiment, comparing the sensor data segmentation map to the reference segmentation map comprises adjusting a relative translation and/or a rotation between the sensor data segmentation map and the reference segmentation map. The comparison process is thus limited to the determination of one or two parameters.

In yet another embodiment, the labelled reference segmentation map is determined by the following steps:
- determining georeferenced reference data; and
- segmenting the reference data to generate the reference segmentation map.

In this embodiment, the reference segmentation map comprises one or more reference segments, and a set of labels. Each of the labels relates to a type of a reference segment and is indicative of a type of the segment.

This is preferably done in an off-line process. The process to generate the labelled reference segmentation map may be substantially the same as the step of segmenting the sensor data. Any specifics of the step of segmenting the sensor data are also applicable to determination, in particular generation of the labelled reference segmentation map from the georeferenced reference data.

A second aspect of the present disclosure relates to a system comprising one or more processors and one or more storage devices, wherein the system is configured to perform the computer-implemented method of the first and/or second aspect of the present disclosure.

A third aspect of the present disclosure relates to a computer program product for loading into a memory of the system. The computer program comprises instructions, that, when executed by a processor of the system, cause the system to execute a method of the first and/or second aspect of the present disclosure.

In an embodiment, a non-transitory computer-readable storage medium is provided that stores instructions executable by one or more processors. The instructions comprise any of the steps of a method of the first and/or second aspect of the present disclosure.

### Brief description of the drawings

The features, objects, and advantages of the present disclosure will become more apparent from the detailed description set forth below when taken in conjunction with the drawings in which like reference numerals refer to similar elements.
- Figs. 1 and 2 show a flow chart of a computer-implemented visual self-localization method 100;
- Fig. 3 shows a block diagram of data types according to an embodiment; and
- Fig. 4 shows a schematic top-view drawing of a scenario 400 wherein an aerial vehicle 404 is conducting measurements;
- Fig. 5 shows a schematic front-view drawing of a scenario 500 wherein an aerial vehicle 502 is conducting measurements; and
- Fig. 6 shows a schematic front-view drawing of a scenario 600 wherein a terrestrial vehicle 602 is conducting measurements.

### Detailed description of the preferred embodiments

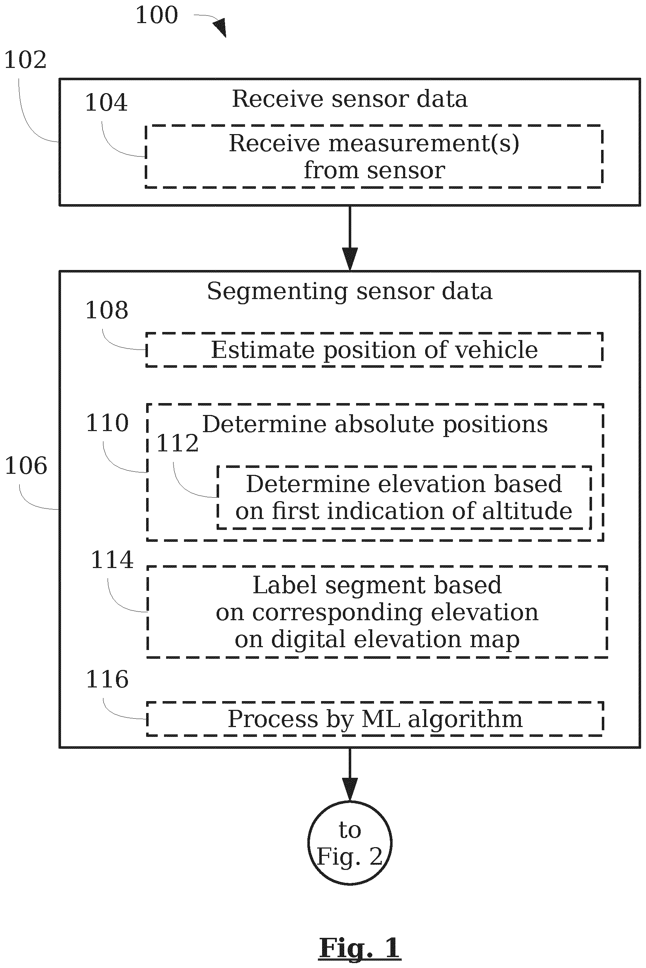

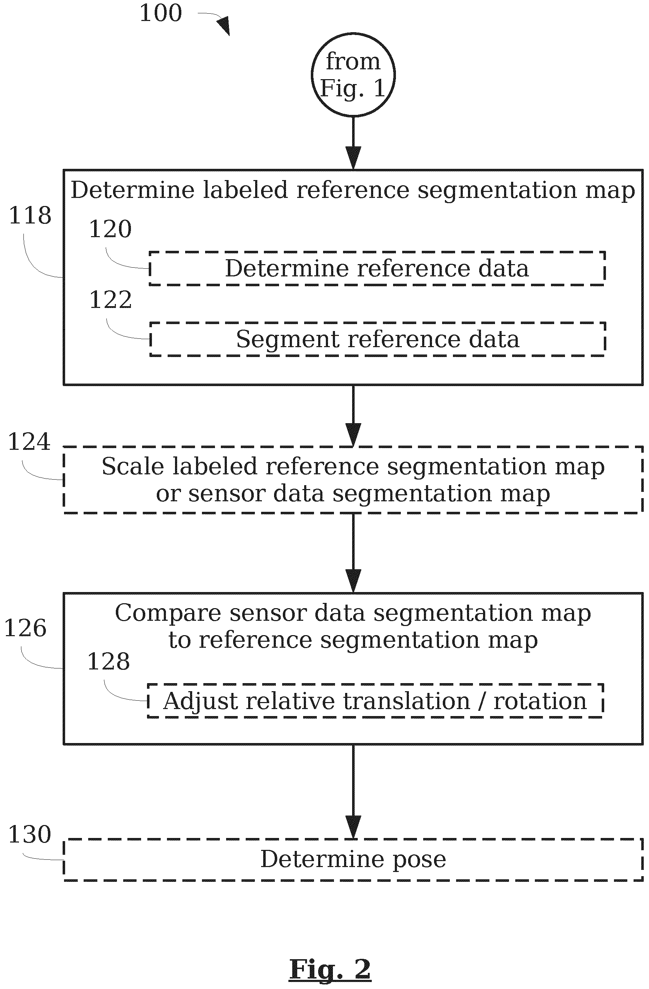

Figs. 1 and 2 show a flow chart of a computer-implemented visual self-localization method 100.

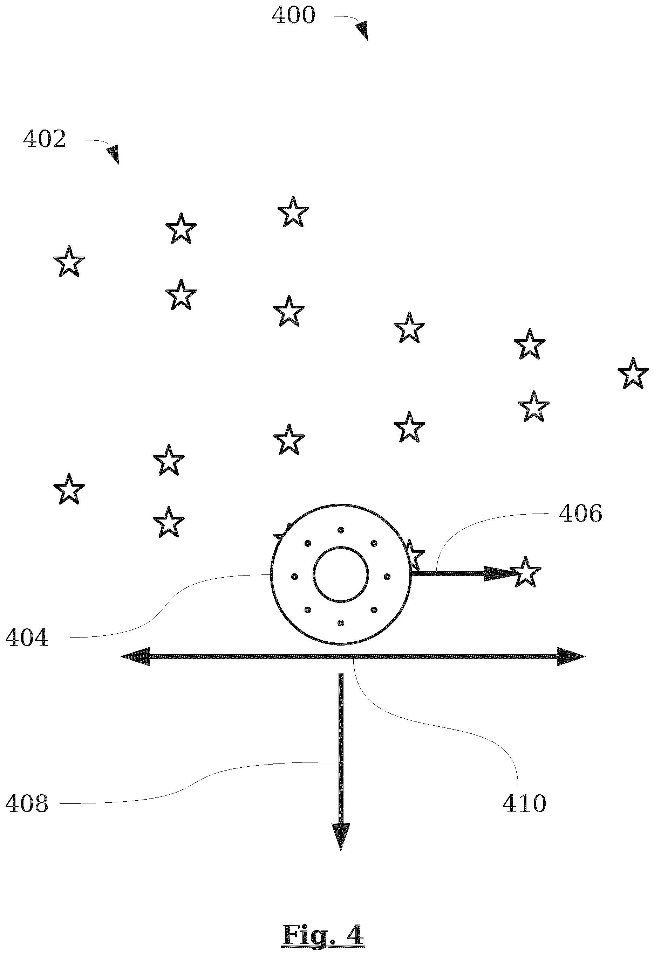

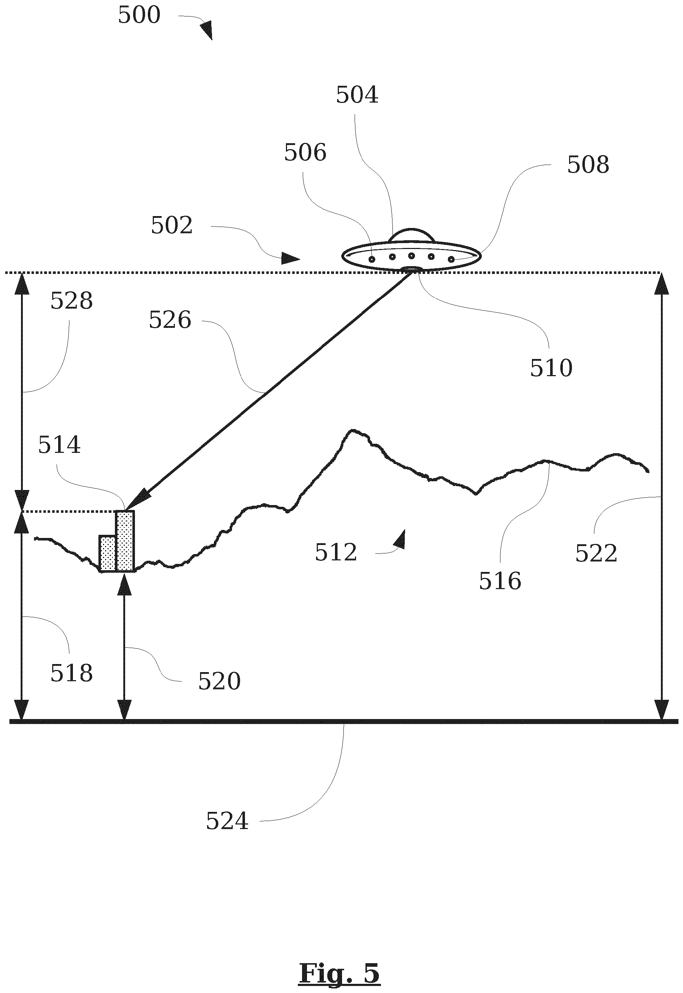

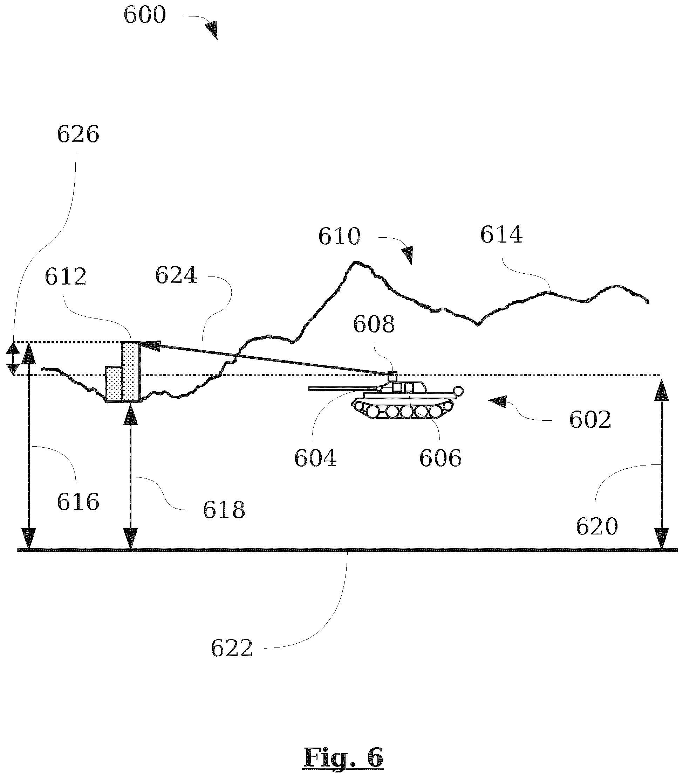

Method 100 may be executed by an onboard computer of a vehicle that localizes itself in its environment, using the surface of the earth as a reference. The vehicle may be a terrestrial vehicle observing a portion of the surface of the earth in its observable range, as shown in Fig. 6. The vehicle may include a vessel navigating on a river or at a coast using sensor data indicative of a coast line or other discernible features of the surface of the earth. However, the method is preferably used on an aerial vehicle, which may receive information on the surface of the earth below it by downward-facing sensors, as shown in Fig. 4 and Fig. 5. The vehicle may be a manned vehicle, but the method is advantageously applicable in case of an unmanned vehicle, for example an autonomously operating drone.

At step 102, sensor data are received. The sensor data are representative of a portion of the surface of the earth. The sensor data are generally any data generable by a sensor, which may include recorded data. This is useful for evaluating processing after a UAV mission. However, the sensor data are preferably obtained, 104, as measurements from a sensor included in or attached to the vehicle. The sensor may include a LIDAR device or a camera. The sensor data represent a portion of the surface of the earth. They are preferably representative of three-dimensional coordinates of one or more points on the surface of the earth, and more preferably representative of a surface profile of a region on the surface of the earth. An example of sensor data is a set of coordinates. Examples of the determination of the sensor data are shown in Figs. 4-6. In these cases, each measurement is indicative of a position of a location on the surface of the earth relative to the position of the vehicle. The coordinates may comprise a direction, which may be expressed as two angles, and a distance.

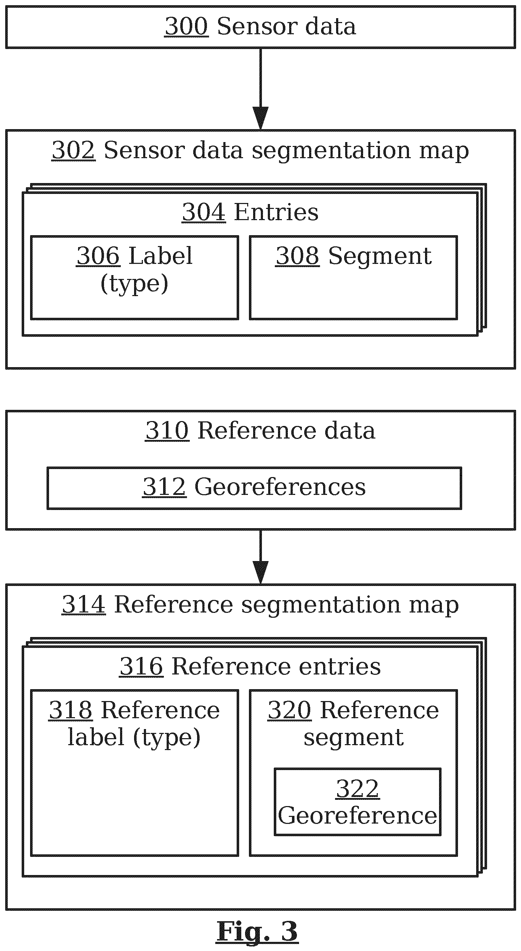

At step 106, the sensor data are segmented. This step results in a sensor data segmentation map, such as the segmentation map 302 as shown in Fig. 3. The segmentation map comprises segments, which may be identified by coordinates, and corresponding labels that are indicative of a type of the corresponding segment. If the sensor comprises a camera, a segmentation algorithm may determine the segmentation map by processing a camera image as an input. If the sensor comprises a sensor configured to scan the portion of the surface of the earth and to determine discrete values, the segmentation algorithm may determine these discrete values to join some of the values to determine segments. This is preferred in case of an active sensor, which may comprise a pulsed radiation source.

It is preferred to estimate, 108, a position of the vehicle. For example, the vehicle may be navigating by a combination of inertial navigation and visual self-positioning. In this case, the inertial navigation system may provide the position estimate, and visual self-positioning allows correcting the position estimate to remedy any drift of the inertial navigation system. This is preferred to the use of visual self-positioning alone where misidentification of a location can lead to a huge error, e.g. when a location is mistaken for a similar location on another continent.

In order to segment the sensor data, an absolute position of the points may be determined at 110. This may be done by combining the sensor data with the position of the vehicle. For example, a position vector indicative of a position of the vehicle with respect to an absolute origin may be added to a vector indicative of a position of a location on the surface of the earth, see Figs. 5 and 6. The absolute position may still be subject to systematic errors of the vehicle position estimate. It may therefore be used as a preliminary position that is to be corrected by the following steps. It allows, however, to determine further information on the location from different sources, such as a digital surface map (DSM) or a digital terrain map (DTM), that can be used to further improve the segmentation of the location. The determination of the absolute position is preferably based on a first indication of an altitude, 112, of the vehicle. This allows improving the reliability of the result since more data are processed.

It is further preferred, 114, to label any determined segment based on a corresponding elevation on a digital elevation map. The digital elevation map may comprise a digital terrain map. In this case, a difference between an absolute altitude of a location and an altitude of a corresponding location on the DTM may be used. If this difference is low, e.g. below a threshold on the order of a meter, the surface is preferably labelled as a lake or a road, depending on geometrical shape and/or a roughness determined from a statistical analysis of points within the corresponding segment. If the difference is higher than the threshold, this may lead to labelling a segment as a region covered by buildings or trees. Again, further classification may depend on a roughness and/or geometrical shape.

It is preferred to segment the sensor data by a machine learning algorithm, 116. An example of a machine learning algorithm that is suitable for this task is described in Kirillov et al.: Segment Anything. arXiv:2304.02643v1 [cs.CV]. The sensor data comprises processing the measurements by a machine learning algorithm, preferably a deep neural network. Machine learning algorithms are particularly suited for segmentation tasks. The machine learning algorithm may be trained by self-supervised learning on a dataset recorded by a vehicle of the same type as used in inference, for execution of the method.

At 118, a labelled reference segmentation map is determined. In embodiments, this may comprise determining georeferenced reference data, 120, and segmenting, 122, the reference data. However, it is preferred to load a stored segmentation map from a local or remote storage location to save compute resources. This is preferable when the method is executed by an embedded system, e.g. on a small unmanned vehicle, such as an unmanned aerial vehicle (UAV).

It is preferred to scale, 124, the labelled reference segmentation map and/or the sensor data segmentation map, prior to comparing the sensor data segmentation map to the reference segmentation map. This scaling step may be based on additional information, such as a measurement of a distance between the vehicle and the points, such as a radar altimeter as shown in Fig. 5. The scaling allows a faster and computationally less expensive subsequent comparison step. An absolute scale of the reference segmentation map is known or can be determined since the reference data are georeferenced. It is furthermore possible to determine the horizontal scale of the sensor data segmentation map based on the altitude, the range, and an angle between the relative direction of each location to the aerial vehicle and a reference direction, e.g. nadir.

The sensor data segmentation map is compared, 126, to the reference segmentation map. This process step may be seen as an optimization problem that aims at minimizing a distance measure indicative of differences between locations of different shapes. This may be done using a SLAM (simultaneous location and mapping) based approach, see Yue et al., LiDAR-based SLAM for robotic mapping: state of the art and new frontiers, arXiv:2311.00276 (2023). The Iterative Closest Point (ICP) technique (Besl and McKay: "A Method for Registration of 3-D Shapes," IEEE Transactions on Pattern Analysis and Machine Intelligence 14, 239 [1992]), Procrustes Analysis (Kendall: "A Survey of the Statistical Theory of Shape," Statistical Science 4, 87 [1989]), and/or Shape Context Matching (Belongie et al.: "Shape Matching and Object Recognition Using Shape Contexts," IEEE Transactions on Pattern Analysis and Machine Intelligence 24, 509 [2002]) may be used to conduct the comparison step.

This step results in a georeferenced sensor-determined segmentation map. This map is applicable for further analysis. For example, manual analysis may allow determination of more differences. Applications, such as in ecology, include the possibility to detect minor changes that do not affect the localization, such as presence or absence of foliage at a certain time.

In a preferred embodiment, the georeferenced sensor data segmentation map is used to determine, 130 a pose of the vehicle. This pose may be given in the same or a similar data format as the position estimated at step 108. The pose may be seen as a corrected, improved determination of the vehicle's position since it is determined using more sensor data. It is preferred to combine steps 126 and 130 by determining a plurality of possible poses and, for each pose, the corresponding the distance measure between the sensor data segmentation map and the reference segmentation map. For each pose, a distance to a previous pose is determined, and the new pose is determined as the possible pose based on the distance measure and the distance to the prior pose. This preferably done by determining a combined function, such as a weighted sum, of the distance measure and the distance prior to the pose, and determining, in particular, minimizing the combined function. The new pose may be done dependent on the distance measure and discarding all for which the distance to the prior pose exceeds a predetermined threshold.

Fig. 3 shows a block diagram of data types according to an embodiment. The sensor data 300 may include any data that is indicative of positions of locations on the surface of the earth. For example, any image recorded showing a part of the surface of the earth may be analysed by photogrammetry and therefore contains enough information. The sensor data 300 may include images taken by an infrared camera if method 100 is supposed to be used for navigation at night. It is, however, preferred to use LIDAR data, which may be given as a set of coordinates of discrete points spread over an area scanned by a LIDAR device.

Since an aerial vehicles may fly at high or low altitudes, the sensor data may comprises images taken at low altitude. This may be systematically different to the reference data 310.

The sensor data segmentation map 302 may be determined step 106 of method 100. It is preferably organized into entries 304, each of which comprises a segment 308, which is preferably stored as an indication of a shape of a region of the surface of the earth pertaining to the segment. The indication may be given as a set of points that indicate boundaries of a shape and constitute a discretized closed curve. The indication is preferably scaled to an absolute scale, so that the dimensions and area of the segment may be derived from it. The label 306 is indicative of a type of the segment. In an example, the type is one of the following four types:
- built-up area (referring to an area whose surface is significantly higher than the surface of a corresponding DTM and wherein the detected surface is smooth),
- road (referring to an area whose surface is substantially the same as the corresponding DTM and wherein the segment is smooth),
- tree cover (referring to an area whose surface is significantly higher than the surface of a corresponding DTM and wherein the detected surface is smooth), and
- grassland (referring to an area whose surface is substantially the same as the corresponding DTM and wherein the segment is smooth).

As far as the reference segmentation map is comparable to this, e.g. by having been determined using the same process as the sensor data segmentation map, the method can be reliably used. This holds even if no more detailed classification of the segments is done (e.g. without distinguishing between lakes and roads, which are both smooth and substantially on the level of the DTM).

The reference data 310 may be similar to the sensor data 300 and include the same data types. However, the reference data may be different from the sensor data 300 since the method 100 involves no comparison of the sensor data 300 and the reference data 310. For example, the reference data may comprise LIDAR data points, images recorded in the infrared or visual parts of the electromagnetic spectrum, imaging radar images, or a combination thereof. The sensor data 300 may comprise only data determined by LIDAR. This is possible as long as segmentation maps 302 and 314 are comparable. However, reference data 310 differ from sensor data 300 in that the referenced data 310 comprise one or more georeferences 312 from which a geographic coordinate of the locations is derivable.

The reference data 310 may comprise satellite imagery, which may differ qualitatively from sensor data 310 collected by an aerial vehicle, in particular if the aerial vehicle flies at low altitude. The differences between reference and sensor data may arise due to the limited resolution of the reference data, in particular because the reference data may not fully capture the elevation profile.

Reference segmentation map 314 may be of substantially the same format as sensor data segmentation map 302 and preferably comprises reference entries 316 similar in structure to entries 304. Each entry 216 relates to a reference segment 320, which comprises a georeference 322. The segment may be specified as a shape in relative coordinates and the georeference 322 may be given as a constant to be added to the relative coordinates to obtain georeferenced coordinates. The segment may also be specified as a shape comprising a full set of georeferenced points. The reference label 318 is indicative of a type of the segment and of a similar or identical format as that of label 306.

Fig. 4 shows a schematic drawing of an aerial vehicle 404 conducting measurements.

This scenario is here shown in a top-view representation. The aerial vehicle 404 is flying in flight direction 408 over the surface of the earth. In general, the aerial vehicle 404 may fly at any altitude as long as the measurements described below are feasible by an appropriate sensor. The aerial vehicle 404 carries in this example a scanning sensor (not shown) that is generally facing downwards.

The sensor is scanning the ground in a scanning direction 410. In this example, the scanning direction is orthogonal to the flight direction 408, although the scanning direction 410 may be at a different angle to the flight direction as long as it permits scanning a surface. In this example, scanning comprises recording relative locations of discrete points 402, each of which is marked as a star in the drawing.

The sensor in this example is a LIDAR sensor emitting a beam 406 to a location on the ground. The sensor is configured to record the reflection and to determine the relative location. Alternatively, other active or passive sensors may be used. Since the points scanned are equidistant in a lateral direction and the scanning speed and flight velocity are constant, scanned points 402 are located on a sinusoidal curve. However, changes in direction and/or speed of the aerial vehicle 404 may lead to different positions of the scanned points.

The location of the scanned points may be determined relative to the aerial vehicle 404 in two steps which are executed for each of the scanned points. First, a preliminary location of the aerial vehicle 404 at the time of recording the measurement signal is determined by the aerial vehicle. The preliminary location need not be an absolute geographical location. It is sufficient to determine the preliminary location as a relative location with respect to an arbitrary first location of the aerial vehicle. This allows accounting for the movement of the aerial vehicle in order to determine relative differences of the locations of the scanned points 402. The preliminary location may be specified as a vector with respect to an origin that is defined with respect to the surface of the earth. The preliminary location may be determined using an inertial navigation system (INS). Second, the relative direction and distance to the aerial vehicle is determined and added to the preliminary location of the aerial vehicle.

These two steps are conducted for each of the scanned points. The result is a set of scanned points whose locations were determined consistently, such that they may be used to generate one segmentation map. The locations are defined relative to the aerial vehicle, but not yet absolutely or with reference to the earth.

It is preferred to scan only a first plurality of points by processing only a limited number of readings from the sensor. This has the advantage that the effect of any drift in determination of the preliminary location, e.g. of any drift of the INS, has only limited effect on the consistency of the resulting set of scanned points: Drifts become sizable only after they accumulate over a plurality of measurements. Therefore, it is preferable to process only a predetermined number of readings. The predetermined number of readings is preferably set to a value depending on the type of the INS. Since the drift of the INS depends on the quality of the INS being used, a higher-grade INS allows for a higher number of readings whilst a lower-grade IMU allows for a lower number of readings. A typical value may be at or around 1000. The subsequent processing steps are explained with reference to Fig. 5.

Fig. 5 shows a front-view of a scenario 500. In particular, Fig. 5 may show a front-view of the same scenario 400 as shown in Fig. 4 or a similar scenario, only one point among the plurality of points 402 located by the sensor is shown, i.e. the top of building 514.

The aerial vehicle 502 comprises a computing device 504 comprising processors and memory devices to execute a method according to the present disclosure such as method 100. The aerial vehicle preferably further comprises a first altimeter 506 and a second altimeter 508. Altimeters 506, 508 determine their own altitude, which may serve to determine an altitude of the vehicle 502 by adding or subtracting a fixed vertical distance to a reference point of the vehicle, which may be the altitude of sensor 510. The aerial vehicle further comprises a sensor for locating objects which is a LIDAR sensor 510 in the present example. In general, the sensor may comprise an active sensor. In other examples, the sensor may comprise a radar and/or a sonar. The sensor may comprise a passive sensor, such as a camera. Camera images may be analysed by an algorithm such as photogrammetry.

The use of LIDAR is also advantageous because such systems may be constructed using components that are comparably simple to manufacture and do not require as many resources. In particular, a system according to the present disclosure has been found to determine a pose of an aerial vehicle at night at a precision sufficient for navigation. For comparison, a similar system employing only passive sensors could achieve similar accuracy only when using sensors in the mid-infrared range, which is requires more complicated and expensive sensor technologies.

The aerial vehicle 502 flies over a landscape 512, which is higher than the sea level 524 in the present example. However, the present disclosure is not limited to that. The calculations can also be done for areas below sea level.

Landscape 512 may comprise one or more irrigated areas that comprise, e.g. a building 514. The landscape 512 may also comprise areas 516 without any human-made structures and with no trees, e.g. the bare rock of a mountain 516. In that area 516 is adequately described by a digital surface map (DSM) or a digital terrain map (DTM), which are identical in this area 516.

The type of a segment may include bare terrain, such as a desert, a steppe, or a water surface. In these cases, the segment is not indicative of an area comprising man-made objects and/or vegetation. Any elevation of the segment is substantially identical to that of a digital terrain map. If, by contrast, the segment is indicative of an area comprising man-made objects (such as built-up areas) or vegetation (such as forest) the elevation is generally higher than the terrain elevation. Distinguishing these allows classifying the area.

In contrast to that, the built-up area comprising buildings 514 is adequately described by a digital surface map (DSM), which comprises buildings and trees. The DSM therefore shows the altitude 518 of the building's top above sea level 524. However, the DTM differs from a DSM in that the DTM does not show the altitude 518 of the building's top. It shows the altitude 520 of the ground at the building above sea level 524. The difference of altitudes 518 and 524 is the building's height.

The aerial vehicle 502 flies at an altitude above sea level 524 that may be determined by an altimeter, such as barometer 508. The sensor 510 has sent a beam 526 to detect a location, which is the top of building 514 in the present case. Its location relative to the aerial vehicle 502 may be determined as described with respect to Figure 4. From this determination, a relative altitude 528, i.e. a difference in altitude between the altitude of the top of the building and the altitude of the aerial vehicle, may be determined. Adding this number (which is negative in the present example) to the altitude 522 of the aerial vehicle 502 yields the altitude 518 of the top of the building above sea level.

As a next step, the latitude and longitude of the location are determined. Then, the altitude of 520 a DTM for this location is subtracted from the altitude 518. This yields an offset, in this case the height of the building. Since the height is several meters, this location may then be classified as part of a built-up area.

If an entire area is scanned, a map of discrete heights, i.e. a height profile, may be determined, wherein a height is determined accordingly for each location. The map may then be segmented into areas according to characteristics of the height profile. For example, a smooth area of narrow lateral extent in one direction with low offset (e.g. less than a meter) is classified as a road. A smooth area that has an offset of many meters may be classified as a building. A rough area, i.e. an area where there are sizable differences in offset for adjacent locations, may be classified as a field if the offset is on the order of a meter on average, and as a forest if the offset is higher on average. The result of this processing step is a segmentation map.

It should be noted that although lateral coordinates (e.g. geodetic coordinates) are needed to align the recorded sensor data with the DTM. However, minor differences do not significantly affect the segmentation step.

The aerial vehicle 502 in this case comprises a second altimeter 508, which is a laser altimeter. In alternative embodiments, radar altimeters or other technology may be used. The second altimeter 508 is configured to determine an altitude of the aerial vehicle 502 over ground. This allows determining or correcting an absolute scaling of the segmentation map, so that the segmentation map is already at the correct scale before the subsequent comparison step.

The segmentation map thus generated may then be compared to a labelled and georeferenced reference segmentation map, and thereby the segmentation map can be georeferenced itself. This is preferably done by translating and/or rotating the segmentation maps to one another such that they are substantially congruent. The georeferenced segmentation map may then serve to determine a pose of the vehicle.

Fig. 6 shows a front-view of a different scenario 600. Here, a terrestrial vehicle 602 comprising a computing device 604 and an altimeter 606 uses a sensor 608, which may be identical or similar to computing device 504, first altimeter 506, and sensor 510 in example scenario 500. The sensor 608 is a LIDAR device operable to determine distances to objects in the surroundings of the vehicle 602, such as a building. In this scenario 600, the sensor 608 is configured to determine ranges to points that are observable by a satellite. In particular, it is preferred to scan the surroundings by beam 624 of the vehicle in full and algorithmically determine points, such as the top 612 of the building, that appear on a top-view of the scenario 600. its surroundings. This scenario 600 may be described as data analysis based on ego-centric vision, where the vehicle sees the world in front of itself. The vehicle may process sensor data determined by sensor 608 by a computing device 604.

The landscape 610 may be similar to landscape 512 and comprise irrigated areas, e.g. with building 612, and bare terrain 614. Measurement of a top 612 of a building may lead to a determination of an altitude 626 of a top of a building relative to the vehicle 602. Unlike in scenario 500, the altitude is generally positive in this example. Adding the altitude 626 to the altitude 620 of the vehicle above sea level 622 as measurable by altimeter 606 yields an absolute altitude 616 of the building top. Based on an estimate of a location of the building, a DTM may be used to determine an altitude 618 of the ground at the location. The difference may then be identified as a height of the building. This allows obtaining more accurate localization of a pose of vehicle 602.

Different applications are possible. For example, a vehicle may comprise a submarine comprising a sonar device to scan an area on the sea ground. In this case, the same method may be applied to segment the sonar map. Another application relates to a ship or submarine using imaging sonar.

### Reference signs

- 100: Computer-implemented visual self-localization method
- 102-130: Steps of method 100
- 300: Sensor data
- 302: Sensor data segmentation map
- 304: Entries
- 306: Label
- 308: Segment
- 310: Reference data
- 312: Georeferences
- 314: Reference segmentation map
- 316: Reference entries
- 318: Reference label
- 320: Reference segment
- 322: Georeference
- 400: Same scenario
- 402: Points
- 404: Aerial vehicle
- 406: Beam
- 408: Flight direction
- 410: Scanning direction
- 500: Scenario
- 502: Aerial vehicle
- 504: Computing device
- 506: First altimeter
- 508: Second altimeter
- 510: Sensor
- 512: Landscape
- 514: Buildings
- 514: Top of building
- 516: Area
- 518: Altitude of building top (surface)
- 520: Altitude of ground (terrain)

- 522: Altitude of vehicle
- 524: Sea level
- 526: Beam
- 528: Difference
- 600: Scenario
- 602: Terrestrial vehicle
- 604: Computing device
- 606: Altimeter
- 608: Sensor
- 610: Landscape
- 612: Buildings
- 612: Top of building
- 614: Area
- 616: Altitude of building top (surface)
- 618: Altitude of ground (terrain)
- 620: Altitude of vehicle
- 622: Sea level
- 624: Beam
- 626: Difference

## Claims

1. A computer-implemented georeferencing method, the method comprising:
receiving (102) sensor data (300) representing a portion of the surface of the earth, wherein the sensor data (300) is obtainable or obtained by a sensor (510) included in or attached to a vehicle (404, 502, 602), preferably an aerial vehicle (404, 502);
segmenting (106) the sensor data (300) to generate a sensor data segmentation map (302) comprising one or more segments and a set of labels, wherein each of the labels relates to a segment (308) and is indicative of a type of the segment (308);
determining (118) a labelled reference segmentation map (314) obtainable by segmenting georeferenced reference data (310); and
comparing (126) the sensor data segmentation map (302) to the reference segmentation map (314) to determine a georeference (322) of the sensor data segmentation map (302).

2. The method of claim 1, wherein the type of the segment (308) is indicative of whether the segment (308) is indicative of an area that comprises man-made objects and/or vegetation.

3. The method of any of the preceding claims, wherein the type of the segment (308) is indicative of a roughness of an area related to the segment (308).

4. The method of any of the preceding claims, wherein the method further comprises determining (130) a pose of the vehicle (404, 502, 602) based on the comparison, in particular based on the determined georeference (322) of the sensor data segmentation map (302).

5. The method of any of the preceding claims, wherein the sensor (510) comprises a range-finding system, preferably a sweeping range-finding system, more preferably a LIDAR sensor.

6. The method of any of the preceding claims, wherein the sensor data (300) comprises one or more measurements by the sensor (510),
wherein each measurement is indicative of a position of a location on the surface of the earth relative to the position of the vehicle (404, 502, 602), and
wherein the method further comprises:
determining (110) an absolute position for each respective location related to each measurement based on an estimated position of the vehicle (404, 502, 602), and
segmenting the sensor data (300) based on the absolute position.

7. The method of any of the preceding claims , further comprising:
segmenting the sensor data (300) based on a or the absolute position of the portion, in particular a or the location, on the surface of the earth;
wherein determining the absolute position comprises:
receiving a first indication of an altitude of the vehicle (404, 502, 602) from a first altimeter (506, 606), preferably a barometer; and
determining (112) an elevation of the portion or location based on the altitude of the vehicle (404, 502, 602) and, preferably, the sensor data.

8. The method of claim 6 or claim 7, wherein segmenting the sensor data (300) comprises receiving a digital elevation map and/or a digital terrain map and determining the type of the segment (308) based on a corresponding elevation at a longitude and latitude based on coordinates of the location.

9. The method of any of the preceding claims, wherein segmenting the sensor data (300) comprises processing (116) the measurements by a machine learning algorithm, preferably a deep neural network.

10. The method of any of the preceding claims, further comprising:
scaling (124) the labelled reference segmentation map (314) to a horizontal scale of the sensor data segmentation map (302); and/or
scaling (124) the sensor data segmentation map (302) to a horizontal scale of the labelled reference segmentation map (314).

11. The method of claim 10, wherein the scaling is executed prior to comparing the sensor data segmentation map (302) to the reference segmentation map (314), and wherein the scaling is based on a second indication of the altitude of the vehicle (404, 502, 602), preferably an altitude measurement by a second altimeter (508) operable to measure a distance of the vehicle (404, 502, 602) to the ground.

12. The method of any of the preceding claims, wherein comparing the sensor data segmentation map (302) to the reference segmentation map (314) comprises adjusting (128) a relative translation and/or a rotation between the sensor data segmentation map (302) and the reference segmentation map (314).

13. The method of any of the preceding claims, wherein the labelled reference segmentation map (314) is determined by:
determining georeferenced reference data (310); and
segmenting the reference data (310) to generate the reference segmentation map (314),
wherein the reference segmentation map (314) comprises one or more reference segments (320), and a set of labels, wherein each of the labels relates to a type of a reference segment (308) and is indicative of a type of the segment (308).

14. A system comprising one or more processors and one or more storage devices, wherein the system is configured to perform the computer-implemented method of any one of claims 1-13.

15. A computer program product for loading into a memory of a computer, comprising instructions, that, when executed by a processor of the computer, cause the computer to execute a computer-implemented method of any of claims 1-13.
